# EUROPEAN PATENT APPLICATION

(11) **EP 2 067 509 A2**
(43) Date of publication of application: **10.06.2009**
(21) Application number: 08252506.4
(22) Date of filing: 23.07.2008
(51) Int. Cl.: A63F 13/10, A63F 13/08

(54) **Game apparatus and computer program**

(30) Priority: 05.12.2007 JP 2007315179
(71) Applicant: Kabushiki Kaisha Bandai, Tokyo 111-8081 (JP)
(72) Inventor: Matsuno, Shotaro, Tokyo 111-8081 (JP); Nakanishi, Kengo, Tokyo 111-8081 (JP)
(74) Representative: Nicholls, Michael John

(57) **Abstract**

To provide a game apparatus that provides for the selection from a plurality of attack methods of an effective attack method in response to the type of character being fought, a portable game apparatus is provided in which, in accordance with a type of attack received from a player and enemy character attributes, an attack value assigned to a received attack is determined, and victory or defeat is determined by subtracting the attack value from an enemy character hit-point value.

## Description

The present invention relates to a technology pertaining to a game apparatus, and more particularly to a portable game apparatus.

Various portable game apparatuses are known. The game apparatus disclosed in cited reference 1 serves as one example thereof.

This game apparatus is a handgun type apparatus in which a player holds a grip portion provided in the apparatus, opens an actuation flap sideward, opens a display upward, and points a gun muzzle portion to a sound source and pulls a trigger. As a result, a frequency or a waveform pattern of a sampled sonic wave is analysed by a computer within the apparatus, and a pre-set specified monster is selected in accordance with the analysed result thereof.

An evaluation of whether or not the selected monster will appear or not is performed on the basis of parameters such as time and temperature, and an image of the monster is displayed on a liquid crystal panel when the evaluated result thereof indicates that the monster is to appear. The player performs an operation to capture this monster based on operation of an arrow button and the trigger. Subsequent to the monster being successfully captured, the number of captured monsters is updated. Various monsters are able to be collected by capturing operations performed towards various sound sources.
[Cited Reference 1] Japanese Utility Model Registration No. 3046095

However, the number of attack methods in the game apparatus described above is restricted to just a single method, and this game apparatus does not provide for the selection of an effective attack method in response to the type of character being fought.

Thereupon, it is an object of the present invention to provide a game apparatus that provides for the selection from a plurality of attack methods of an effective attack method in response to the type of character being fought.

The present invention for resolving the aforementioned problems constitutes a game apparatus for implementing a game, comprising:
display means for displaying a game screen;
first detecting means for judging whether or not a first type of attack operation has been received from a player of the aforementioned game apparatus;
second detecting means for judging whether or not a second type of attack operation has been received from the aforementioned player;
a character table for registering a plurality information data pertaining to characters of the aforementioned game and attribute information data expressing the character type thereof;
an attack value table for registering attack values assigned for the aforementioned first type of attack operation and the aforementioned second type of attack information for each attribute information data of the aforementioned characters;
display control means for displaying one of a plurality of characters registered in the aforementioned character table on the aforementioned game screen;
third detecting means for detecting whether or not the aforementioned character is being displayed on the aforementioned game screen;
judging means for judging a type of attack operation performed by said player when the aforementioned character is displayed on the aforementioned game screen; and
determining means for determining from the aforementioned attack value table an attack value assigned to an attack operation performed by the aforementioned player on the basis of an attack operation type judged by aforementioned judging means and the aforementioned attribute information data of the character displayed on said game screen.

According to the present invention, a game apparatus that provides for the selection from a plurality of attack methods of an effective attack method in response to the type of character being fought can be provided.

The invention will now be described by way of nonlimiting examples, with reference to the accompanying drawings, in which:
[FIG. 1] is a diagram showing one example of the external appearance of a portable game apparatus of an embodiment of the present invention;
[FIG. 2a] is a diagram showing one example of the external appearance of a portable game apparatus at a stage of modification to the gun mode of an embodiment of the present invention;
[FIG. 2b] is a diagram showing one example of the external appearance of a gun mode portable game apparatus of an embodiment of the present invention;
[FIG. 3a] is a diagram showing one example of the external appearance of a portable game apparatus at a stage of modification to the blade mode of an embodiment of the present invention;
[FIG. 3b] is a diagram showing one example of the external appearance of a blade mode portable game apparatus of an embodiment of the present invention;
[FIG. 4] is a block diagram showing one example of the hardware configuration of a portable game apparatus 100 of an embodiment of the present invention;
[FIG. 5] is a flowchart of one example of a game process of an embodiment of the present invention;
[FIG. 6] is a diagram for explaining azimuth information acquirable by an azimuth sensor 407 of an embodiment of the present invention;
[FIG. 7] is a diagram showing one example of the configuration of an azimuth information table of an embodiment of the present invention;
[FIG. 8] is a diagram showing one example of an enemy character table of an embodiment of the present invention;
[FIG. 9] is a diagram showing one example of the configuration of an attack value table based on a combination of attack attributes and enemy character attributes of an embodiment of the present invention;
[FIG. 10] is a flowchart of one example of the detailed processing for displaying an enemy character of Step S506 of FIG. 5 of an embodiment of the present invention;
[FIG. 11] is a diagram showing one example of a display screen for notifying a player of enemy character attributes of an embodiment of the present invention; and
[FIG. 12] is a diagram of one example of an enemy character display mode of an embodiment of the present invention.

### [First Embodiment]

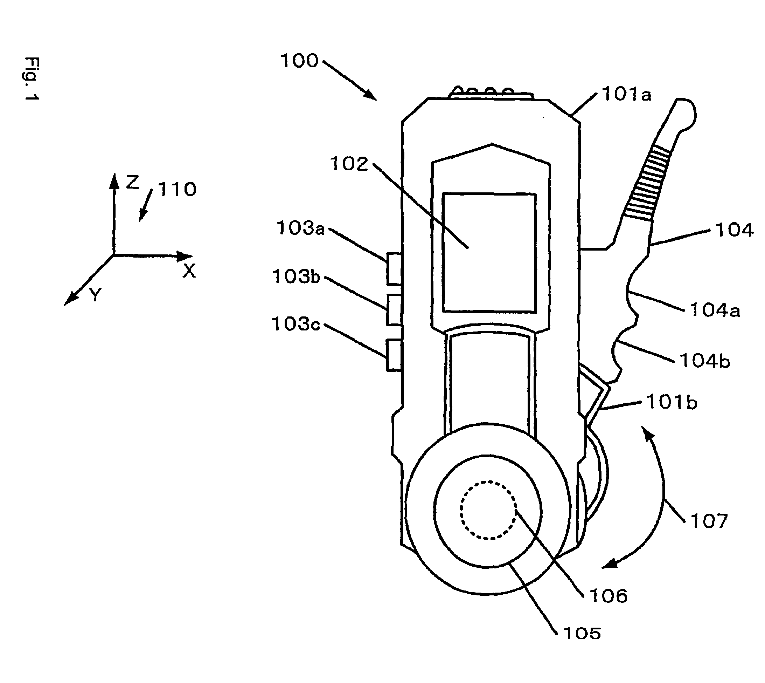

FIG. 1 is a diagram showing the external appearance of a portable game apparatus pertaining to this embodiment. As shown in this diagram, a portable game apparatus 100 is constituted from a first main body 101a and second main body 101b, the second main body 101b and first main body 101a being connected to be rotatable in a direction of an arrow 107 about a rotating axis 106. Notably, an XYZ coordinate system 110 constitutes a coordinate system established for the purpose of describing a surface of revolution of the second main body 101b and corresponds to the three-dimensional coordinates that prescribe a space occupied by the portable game apparatus 100. The surface of revolution defined by an arrow 107 belongs to the X-Z plane of the coordinate system 110.

In addition, a display portion 102 configured from a transmitting-type liquid crystal display and a cartridge 105 detachable from the first main body 101a are disposed on the first main body 101a. Various later-described game screens are displayed on the display portion 102. Predetermined character-related information is contained in the cartridge 105.

Operating buttons 103a to 103c and a lever 104 are disposed on the second main body 101b. The operating buttons 103a to 103c function as input means by which a player of the portable game apparatus 100 inputs various operation commands. The operating buttons 103a to 103c are hereinafter collectively referred to as a "button group 103". The lever 104 serves as operating means operated in a manner described later when a player attacks an enemy character displayed on the display portion 102. Recess portions 104a and 104b into which a player hooks their index finger and middle finger are provided in the lever 104.

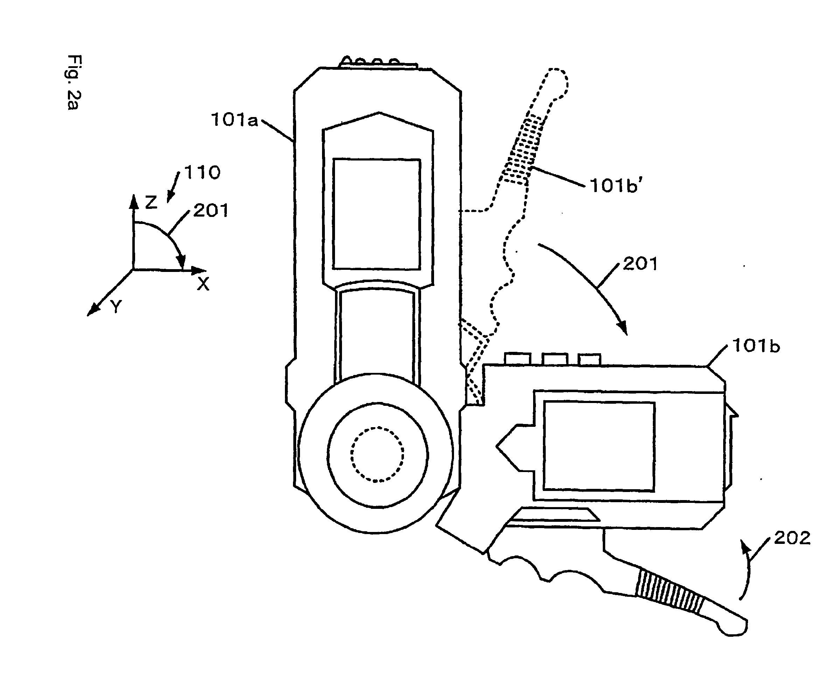

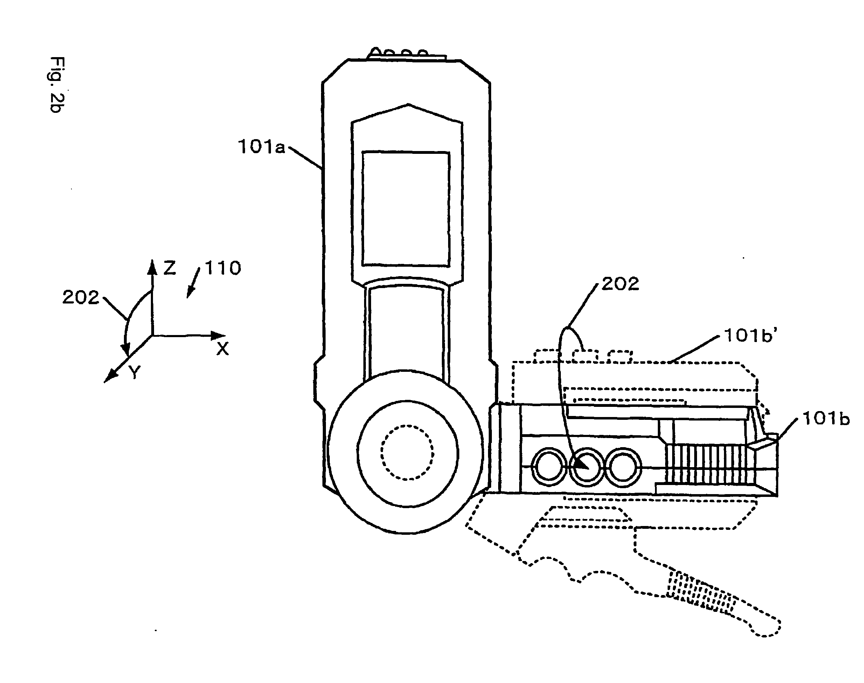

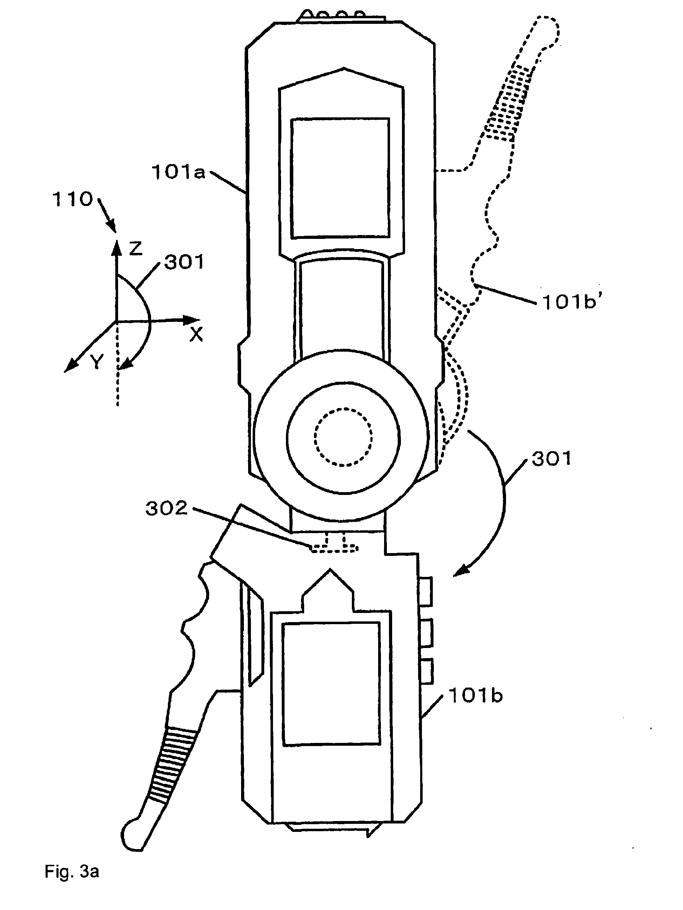

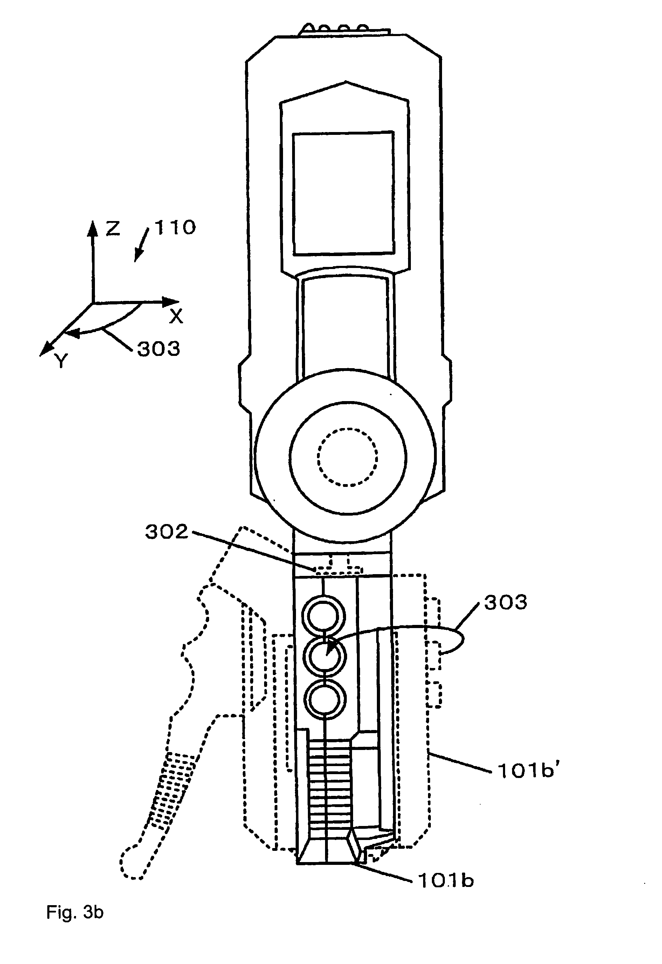

As described with reference to FIG. 2a and FIG. 2b and FIG. 3a and FIG. 3b, by shifting the second main body 101b towards the first main body 101a, two modes of the portable game apparatus 100 of this embodiment, that is to say, a first mode and a second mode, can be adopted. These modes shall be hereinafter referred to as a "gun mode" and a "blade mode" respectively.

Notably, in FIG. 2a and FIG. 2b and FIG. 3a and FIG. 3b, the broken line denotes a second main body 101b' prior to being shifted, and the solid line denotes a second main body 101b after being shifted.

First, the gun mode will be described with reference to FIG. 2a and FIG. 2b. FIG. 2a is a diagram showing a state in which the second main body 101b has been turned 90° clockwise (direction of the arrow 201) with respect to the first main body 101a. The surface of revolution defined by an arrow 201 at this time belongs to the X-Z plane of the XYZ coordinate system 110. Notably, the lever 104 can be operated in the direction of the second main body 101b as indicated by the arrow 202.

FIG. 2b shows a state in which the second main body 101b has been rotated 90° from the state of FIG. 2a in the direction of the arrow 202. The surface of revolution defined by the arrow 202 at this time belongs in the Y-Z plane of the XYZ coordinate system 110. In this state, the longitudinal direction (Z-axis direction) of the first main body 101a and the longitudinal direction (X-axis direction) of the second main body 101b are positioned practically orthogonally. The rotating axis that allows rotation in the direction of the arrow 202 will be described with reference to Fig. 3.

In the gun mode of FIG. 2b, a player looking at the display portion 102 grips the second main body 101b with their right hand, and hooks their index finger and middle finger into the recess portions 104a and 104b of the lever 104 to operate the lever 104 to the second main body 101b side (direction shown by the arrow 202 in FIG. 2a).

The blade mode will be hereinafter described with reference to FIG. 3a and FIG. 3b. FIG. 3a is a diagram showing a state in which the second main body 101b has been turned 180° clockwise (direction of the arrow 301) from the state of FIG. 1. The surface of revolution defined by the arrow 301 at this time lies in an X-Z plane of the XYZ coordinate system 110.

FIG. 3b shows a state in which the second main body 101b has been rotated 90° in the direction of the arrow 303 from the state of FIG. 3a. The surface of revolution defined by the arrow 303 at this time belongs in the X-Y plane of the XYZ coordinate system 110. In this state, the longitudinal direction (Z-axis direction) of the first main body 101a and the longitudinal direction of the second main body 101b (Z-axis direction) are positioned practically linearly.

An engaging portion 302 shown by the broken line in FIG. 3a and FIG. 3b constitutes a rotating axis of the second main body 101b rotated in either the Y-Z plane or X-Y plane with respect to the first main body 101a.

Notably, while the portable game appratus of this embodiment is described as having the external appearance configuration of FIG. 1, FIG. 2a, FIG. 2b, FIG. 3a and FIG. 3b, the arrangement and shape and so on of the display portion 102, the operating buttons 103a to 103c, the lever 104 and the cartridge 105 are not restricted to arrangement and shape shown in the diagrams, and a range of modifications thereto may be considered. In addition, it will be apparent from the following description that content of this description is also applicable to these modifications.

In addition, FIG. 1 and the other diagrams provide an illustration of the component portions employed in the following description, and other component portions not directly linked to the gist of this embodiment such as the power source switch have been omitted from these diagrams.

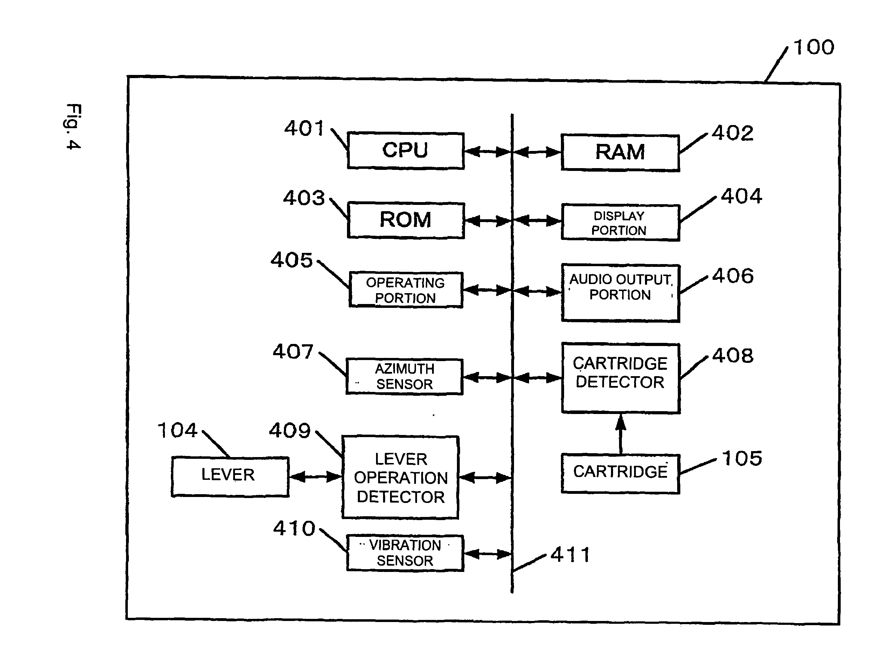

FIG. 4 is a block diagram showing one example of the hardware configuration of the portable game apparatus 100 pertaining to this embodiment.

A CPU 401 employs programs or data stored in a ROM 403 and data temporarily held in a RAM 402 to execute the overall control of the portable game apparatus 100 and implement a later-described game process. In addition, a timer not shown in the diagram for measuring time is provided in the inner part of the CPU 401.

The RAM 402 can be furnished as appropriate with various areas including an area for temporarily storing processing data, an area for temporarily storing a detected result from a lever operation detecting portion 409 as data, an area for temporarily storing a detected result of an azimuth sensor 407 as data, an area for temporarily storing cartridge information detected by a cartridge detecting portion 408, an area for temporarily storing vibration information detected by a vibration sensor 410, and a work area employed when the CPU 401 executes various processings.

The ROM 403 stores the programs and data for causing the CPU 401 to execute the overall control of the portable game apparatus 100 and implement the later-described game process. This data includes a later-described enemy character table 800 and attack value table 900. In addition, the data of these tables is loaded into the RAM 402 and employed in the game process as appropriate.

A display portion 404 used for the display of characters and so on describes a configuration correspondent to the display portion 102 of FIG. 1. An operating portion 405 used to receive operations from a user describes a configuration corresponding to the button group 103. An audio output portion 406 outputs audio such as sound effects as the game advances.

An azimuth sensor 407 detects the azimuth of the main bodies. The detected results therof are stored in the RAM 402 as data. Notably, while there are no particular restrictions to the detection precision of the azimuth sensor 407, a level of precision thereof that facilitates the embodiment of the following invention is required. A cartridge detecting portion 408 functions as a mounting portion for mounting the cartridge 105 on the first main body 101a, and acquires cartridge information subsequent to detecting that this mounting has occurred. The lever operation detecting portion 409 detects whether or not the lever 104 has been operated, and the detected data that expresses whether or not this operation has occurred is held in the RAM 402.

A vibration sensor 410 detects the vibration produced when the device main body is shaken by a player. This sensor constitutes, for example, a mechanism comprising a bead passing over a pole futher comprising a mechanism for detecting, when the main body is shaken, the bead moving up and down over the pole and reaching an upper end portion. In addition, a sensor having a detection mechanism for detecting vibration or acceleration sensor can be employed. A bus 411 links the above-described component parts.

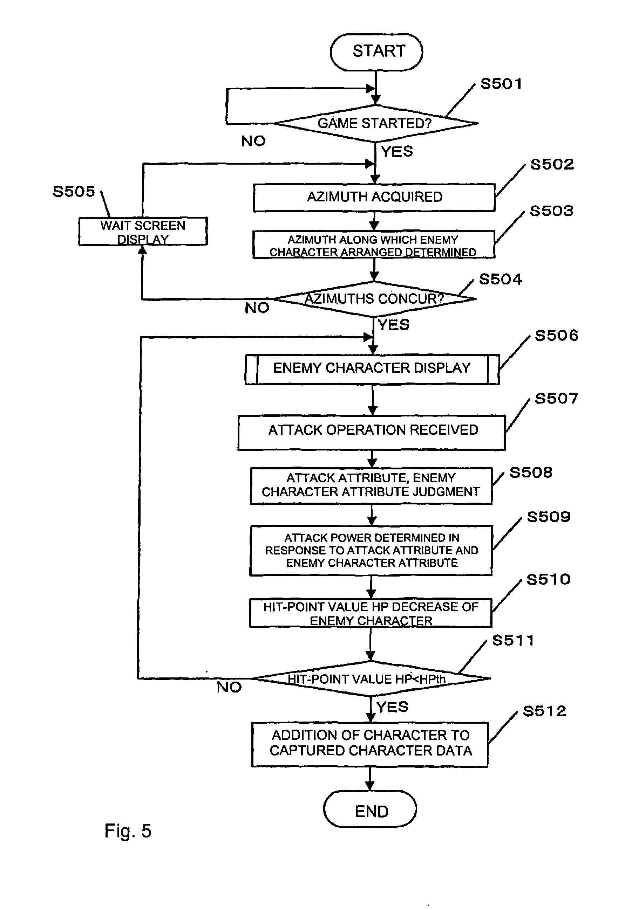

The game process performed employing the portable game apparatus 100 corresponding to this embodiment shall be hereinafter described. FIG. 5 is a flowchart of one example of a game process corresponding to this embodiment. The programs or data for causing the CPU 401 to execute the process in accordance with the flowchart shown in FIG. 5 are stored in the ROM 403, and the portable game apparatus 100 pertaining to this embodiment executes the hereinafter described process as a result of the CPU 401 employing these programs or data to execute the process.

First, in a Step S501, a judgment as to whether or not the game has been started is performed. If the game has been started ("YES" in Step S501), the process shifts to Step S502.

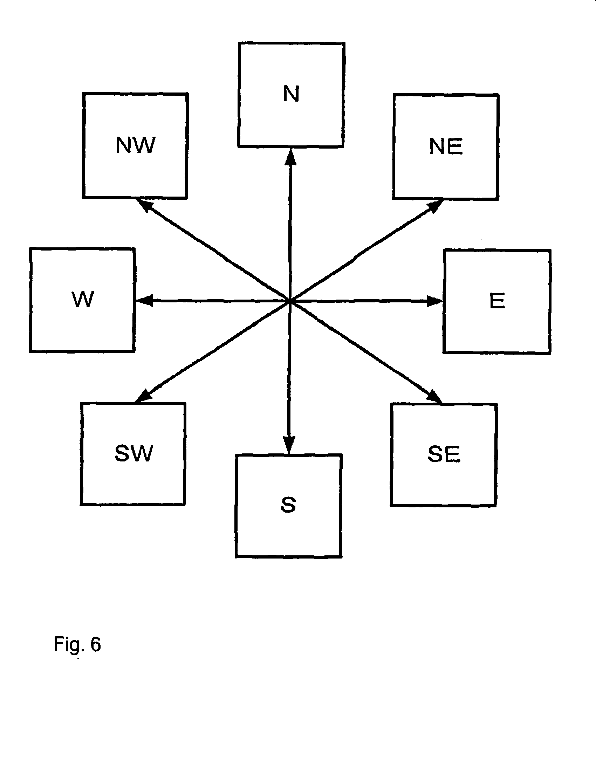

When the game is started, in Step S502 information (azimuth information) pertaining to the direction (current azimuth) in which the portable game apparatus 100 is currently turned is acquired by way of the azimuth sensor 407. In this embodiment, as shown in FIG. 6, position information of eight azimuths, that is North (N), North East (NE), East (E), South East (SE), South (S), South West (SW), West (W), and North West (NW) is acquirable by means of the azimuth sensor 407. The azimuth information acquired by the azimuth sensor is stored in the RAM 402. The RAM 402 comprises an azimuth information table for storing the acquired azimuth information.

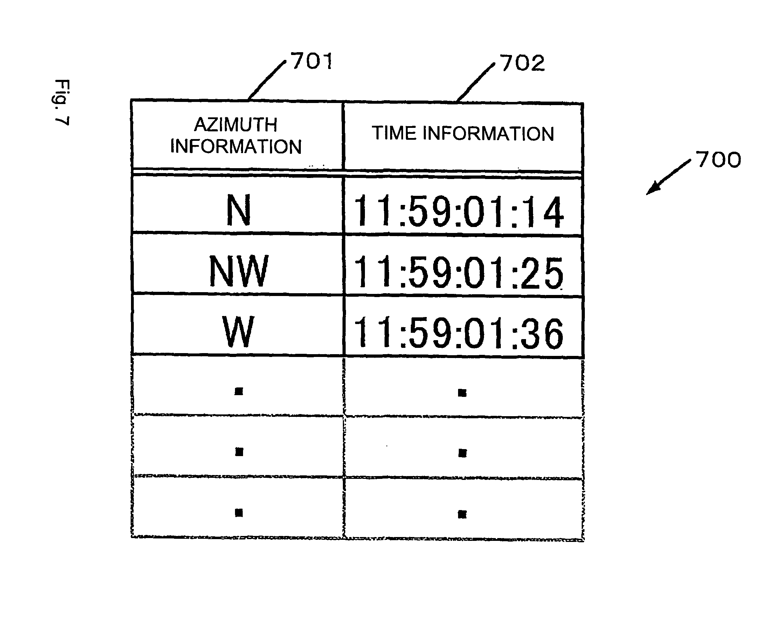

FIG. 7 is a diagram showing one example of the configuration of an azimuth information table. Azimuth information 701 and time information 702 are registered in an azimuth information table 700. The registered azimuth information 701 constitutes information pertaining to the azimuth acquired by the azimuth sensor 407. The registered time information 702 constitutes information pertaining to the time at which the azimuth information was acquired. A timer function of the CPU 401 is employed to measure this timing.

Returning to FIG. 5, in Step S503 the azimuth along which the enemy character is disposed is determined. One of the eight azimuths of FIG. 6 is detected as the azimuth along which the enemy character is disposed. Furthermore, in Step S504 a judgment as to whether the azimuth information comprising the most recent time information 702 and the azimuth along which the enemy character is disposed as determined in Step S503 of the azimuth information 701 stored in the azimuth information table concur is made. If they do not concur ("NO" in Step S504), the process shifts to Step S505. In Step S505, the enemy character is not directly displayed on a screen, and a wait screen that serves to notify that a particular enemy character exists in a different azimuth to the azimuth along which the portable game apparatus 100 is currently orientated is displayed. The user, in response to this wait screen, changes the azimuth along which the portable game apparatus 100 is orientated whereupon, as a result, the process returns to Step S502, the azimuth is acquired, and the above-described process is repeated.

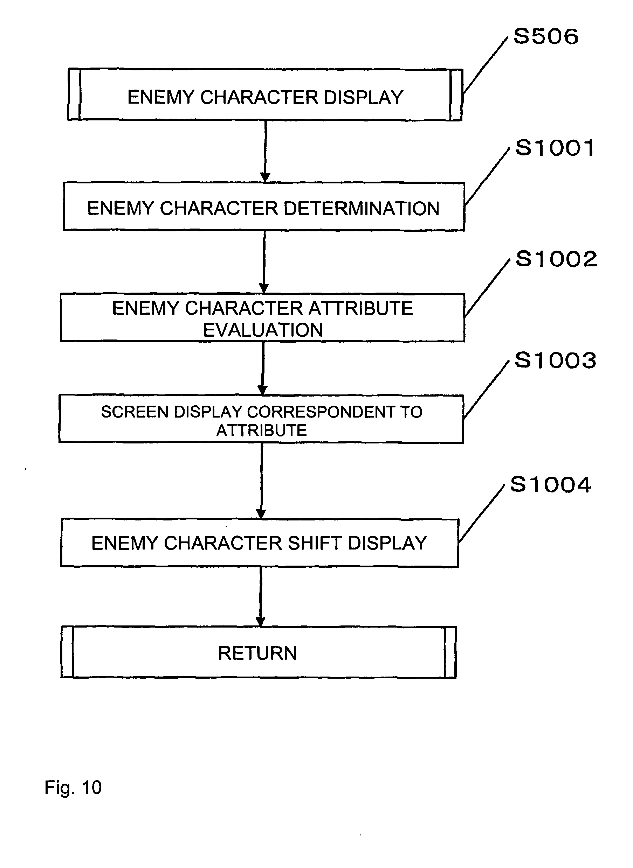

When the current azimuth and the azimuth along which the enemy character is disposed concur in the judgment of Step S504 ("YES" in Step S504), the process shifts to Step S506. In Step S506, the enemy character is displayed on the screen of the display portion 404. The enemy character display process of Step S506 will be described in more detail later with reference to the flowchart of FIG. 10.

In the subsequent Step S507, the attack operation corresponding to the enemy character is received. More specifically, the operation of the lever 104 is detected by the lever operation detecting portion 409. In addition, when the main body is shaken, the vibration is detected by the vibration sensor. The CPU 401 is notified of the detected result thereof. Moreover, the vibration direction of the main body can be taken as the Z-axis direction (vertical direction) in the "blade mode" state of FIG. 3b. Notably, the X-axis direction and Y-axis direction components may also be included as vibration directions.

In a subsequent Step S508, attack attributes and enemy character attributes received in Step S509 are judged.

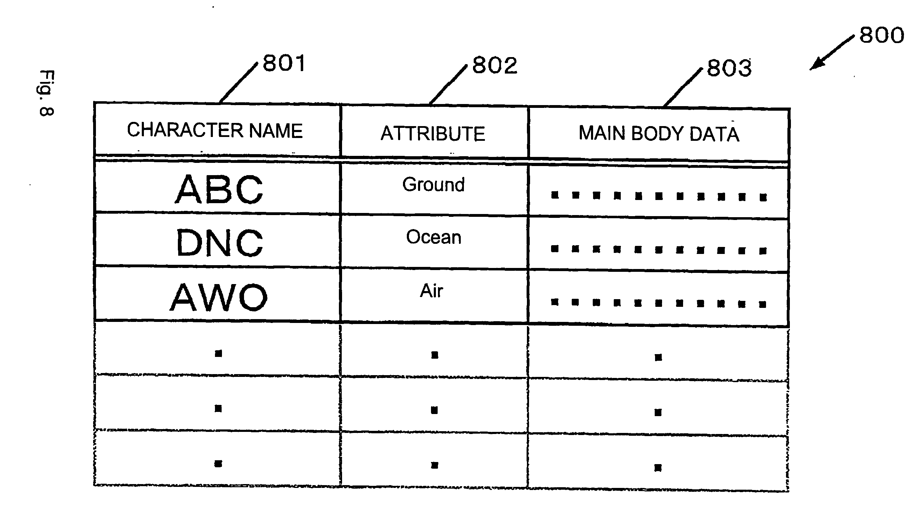

In this embodiment, three attribute types, namely a first attribute, a second attribute and a third attribute are assigned to an enemy charcter. By way of example, the first attribute may be referred to as a "ground attribute", the second attribute as an "air attribute", and the third attribute as an "ocean attribute". Notably, while the use of three types of attribute serves only as an example of an attribute combination, at least two of these attributes should be assigned to an enemy character. Data pertaining to an enemy character is managed by way of the enemy character table 800 shown in FIG. 8.

FIG. 8 is a diagram of one example of the configuration of the data of a management table for managing enemy character data. In FIG. 8, names assigned to enemy characters are registered as a character name 801. The attribute 802 is registered as an attribute assigned to an enemy character. For example, the attribute assigned to the enemy character of character name 801 "ABC" is "ground". The main body data 803 contains various parameters including image data for displaying a correspondent character in the display portion 404, and a hit-point value and attack value of a particular character when it is utilized in a game.

In addition, in this embodiment, to attack an enemy character either the lever 104 is utilized or the main body of the portable game apparatus 100 is shaken, and a "gun mode" attribute and a "blade mode" attribute are assigned for each of these attack modes.

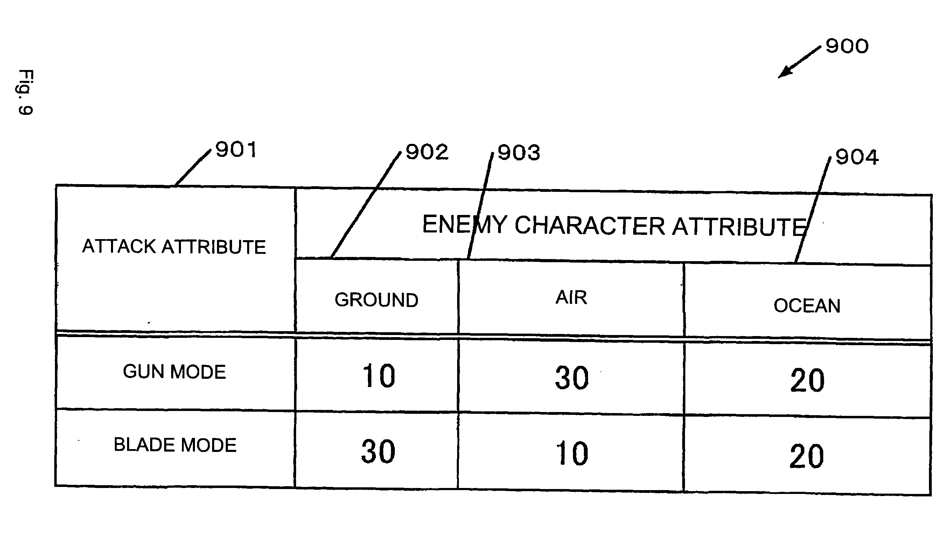

In this embodiment, the attack value is determined in response to a combination of an attack attribute (attack operation type) and an enemy character attribute. FIG. 9 shows attacks value based on a combination of an attack attribute (attack operation type) and an enemy character attribute in a table form.

In the attack value table 900 of this diagram, the two attack attributes of "gun mode" and "blade mode" are registered as an attack attribute 901. In 902 to 904, attack values for attack attributes when the enemy character attribute is assigned as "ground", "air" and "ocean" are registered.

In this embodiment, a minimum attack value of the attack values assigned to the "blade mode" is assigned to an attribute assigned to which is a maximum attack value of the attack values assigned to the "gun mode". In addition, a maximum attack value of the attack values assigned to the "blade mode" is assigned to an attribute assigned to which is a minimum attack value of the attack values assigned to the "gun mode".

That is to say, for the "gun mode" attack attribute, a minimum attack value of "10 points" is assigned to the enemy character of the "ground" attribute, and a maximum attack value of "30" points is assigned to the enemy character of the "air" attribute. In contrast, for the "blade mode" attack attribute, a maximum attack value of "30 points" is assigned to the enemy character of the "ground" attribute, and a minimum attack value of "10" points is assigned to the enemy character of the "air" attribute. In addition, the enemy character of the "ocean" attribute is assigned a common "20" point attack value. Notably, a definition of the attack values assigned commonly to the attacks for an enemy character of two attributes has been omitted.

In this way, attack by the "blade mode" is more effective for an enemy character possessing the "ground" attribute, and attack by the "gun mode" is more effective for an enemy character possessing the "air" attribute. The "gun mode" and "blade mode" are equally effective for an enemy character possessing the "ocean" attribute.

Returning to the description of FIG. 5, in Step S509 the attack power assigned to the attack operation received in Step S507 is determined in accordance with the judgment result of Step S508. Thereafter, in Step S510, the hit-point value (HP) of the enemy character is decreased in response to the determined attack power. Here, for example, the attack power value can be subtracted from the hit-point value of the enemy character.

Next, in Step S511, based on a judgment as to whether or not the hit-point value HP is less than a predtermined threshold value HPth, a victory-defeat judgment of the process is performed. If the hit-point value HP is less than a threshold value HPth, ("YES" in Step S511), information of a particular enemy character is added to a captured character table in which the captured characters are registered. The process then ends. In a game corresponding to this embodiment, the game process can be controlled in response to the number of captured characters added to the captured character table. On the other hand, when the hit-point value HP is not less than the threshold value HPth ("NO" in Step S511), the process returns to Step S506 and the process subsequent thereto is repeated.

Here, the display of the enemy character of Step S506 will be described further with reference to the flowchart of FIG. 10.

First, in a Step S1001, the enemy character to be displayed is determined from the enemy characters registered in the enemy character table 800. In a subsequent Step S1002, a judgment of the attributes of the enemy character determined in Step S1001 is performed. For example, when an enemy character of the character name 801 "DNC" is selected, a judgment that this possesses the "ocean" attribute can be performed.

In a subsequent Step S1003, a screen for notifying a player of the attributes of an enemy character is displayed on a screen of the display portion 404 in accordance with the judgment result of the enemy character attributes of Step S1002.

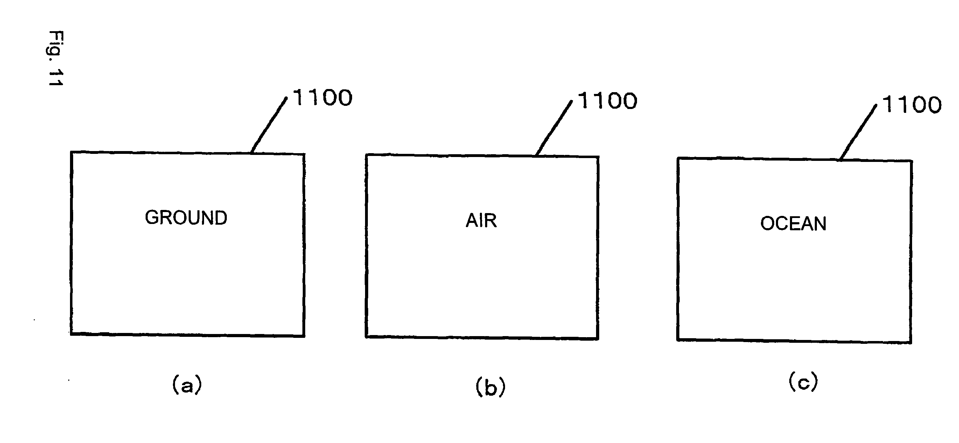

FIG. 11 is a diagram showing one example of a display screen for notifying a player of enemy character attributes. FIG. 11(a) displays the word "ground" which indicates a ground attribute, FIG. 11(b) displays the word "air" which indicates an air attribute, and FIG. 11(c) displays the word "ocean" which indicates an ocean attribute. Accordingly, in accordance with this display, a player is able to ascertain which enemy characters possessing which attributes are registered and, accordingly, is able to select an effective attack method.

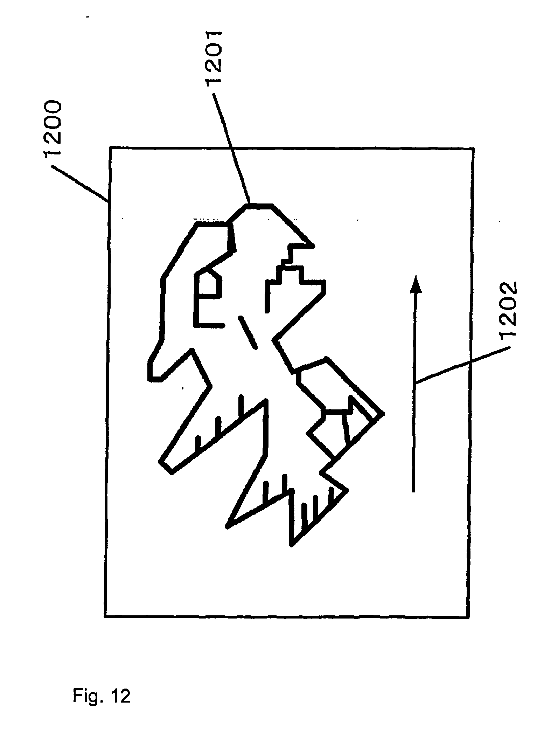

Returning to FIG. 10, in a subsequent Step S1004, the screen is switched to a display content that indicates the enemy character has been moved across the screen. FIG. 12 shows one example of the display screen at this time. In FIG. 12, an enemy character 1201 is displayed on the screen 1200. The enemy character 1201 is orientated toward the right of the screen and, accordingly, the direction of advancement of the enemy character is shown by the arrow 1202. Notably, the arrow 1202 is used to express the shift direction, and does not need to be displayed on an actual game screen.

### [Other Embodiments]

The aforementioned processes (for example, the processes in accordance wih the flowcharts shown in FIG. 5 and FIG. 10 of the aforementioned embodiments) are stored as computer programs in a storage medium such as a CD-R, ROM and DVD-ROM and MO and so on and, subsequent to the programs stored in this storage medium being read into a computer (installed or copied), a computer is able to function as a game appratus correspondent to the present invention. Accordingly, it is clear that the computer programs or the storage medium in which these computer programs are stored falls within the scope of the present invention.

## Claims

1. Game apparatus for implementing a game, comprising:
display means for displaying a game screen;
first detecting means for judging whether or not a first type of attack operation has been received from a player of said game apparatus;
second detecting means for judging whether or not a second type of attack operation has been received from said player;
a character table for registering a plurality of information data pertaining to characters of said game and attribute information data expressing character type thereof;
an attack value table for registering attack values assigned for said first type of attack operation and said second type of attack information for each attribute information data of said characters;
display control means for displaying one of a plurality of characters registered in said character table on said game screen;
third detecting means for detecting whether or not said character is being displayed on said game screen;
judging means for judging a type of attack operation performed by said player when said character is displayed on said game screen; and
determining means for determining from said attack value table an attack value assigned to an attack operation performed by said player on the basis of an attack operation type judged by said judging means and said attribute information data of the character displayed on said game screen.

2. Game apparatus according to Claim 1, **characterized in that** said game apparatus further comprises victory/defeat determining means for determining victory/defeat based on subtraction of an attack value determined by said determining means from a hit-point value of a character displayed on said game screen.

3. Game apparatus according to Claim 1 or Claim 2, **characterized in that** said second detecting means detects a vibration applied to a main body of said game apparatus as said second type of attack operation.

4. Game apparatus according to Claim 3, **characterized in that** said vibration constitutes a vibration in a vertical direction of the main body of said game apparatus.

5. Game apparatus according to any of Claims 1 to 4, **characterized in that** said game apparatus is configured from a movably connected first main body and second main body,
said second main body comprises a lever for receiving an operation from said player, and
said first detecting means detects an operation of said lever as said first type of attack operation.

6. Game apparatus according to any of Claims 1 to 5, **characterized in that**
said attribute information data contains at least two attributes,
and as the attack values registered in said attack value table,
a minimum attack value of the attack values assigned for said second type of attack operation is assigned to an attribute assigned a maximum value of the attack values assigned to said first type of attack operation, and
a maximum attack value of the attack values assigned for said second type of attack operation is assigned to an attribute assigned a minimum value of the attack values assigned to said first type of attack operation.

7. Game apparatus according to any of Claims 1 to 6, **characterized in that** when said display control means displays said character on said game screen attribute information assigned to that character is displayed on a screen.

8. Game apparatus according to any of Claims 1 to 7, **characterized by** further comprising an azimuth sensor for detecting an azimuth along which the main body of said game apparatus is orientated,
said display control means displaying a character on said game screen when said azimumth sensor detects the main body of said game apparatus as being orientated in a pretermined direction.

9. Game apparatus according to any of Claims 5 to 8, **characterized in that** said game apparatus is modifiable to a first mode for executing the first type of attack operation and a second mode for executing the second type of attack operation,
said first mode being a mode in which a longitudinal direction of said first main body and a longitudinal direction of said second main body are positioned practically orthogonally,
and said second mode being a mode in which a longitudinal direciotn of said first main body and a longitudinal direction of said second main body are positioned practically linearly.

10. Computer program for causing an information processing apparatus comprising an azimuth sensor to function as the game apparatus according to any of Claims 1 to 9.
